# EUROPÄISCHE PATENTANMELDUNG

(11) **EP 2 692 786 A1**
(43) Veröffentlichungstag der Anmeldung: **05.02.2014**
(21) Anmeldenummer: 12178970.5
(22) Anmeldetag: 02.08.2012
(51) Int. Cl.: C08J 9/00, C08K 5/00, C08K 5/51, C08K 5/524, C08L 25/08

(54) **Flammgeschützter und wärmeformbeständiger Extrusionsschaumstoff aus Styrolcopolymeren**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Extrusionsschaumstoffe auf Basis von thermoplastischen Polymeren P, enthaltend
P1) 50 bis 100 Gewichtsteile eines oder mehrerer Styrolcopolymere, welche einpolymerisierte Maleinsäureanhydrid-Einheiten enthalten und einen Styrolgehalt im Bereich von 65 bis 90 Gew.-%, bezogen auf P1, aufweisen,
P2) 0 bis 50 Gewichtsteile eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergeben,
F1) 1 bis 10 Gewichtsteile, bevorzugt 2 bis 8 Gewichtsteile, besonders bevorzugt 3 bis 7 Gewichtsteile, bezogen auf P, eines bromierten Trialkylphosphats der Formel (I) als Flammschutzmittel,

(O)P(OR)₃ (I)

wobei
R gleich oder verschieden eine geradkettige oder verzweigte Alkylgruppe mit 1 bis 6 Kohlenstoffatomen bedeutet, wobei ein, zwei oder drei Wasserstoffatome durch Brom substituiert sind.
F2) 0,01 bis 3 Gewichtsteile bezogen auf P, an Dicumyl oder einer oder mehrere Verbindungen aus der Gruppe der Hydroxylamine und Anhydride oder Mischungen davon als Flammschutzsynergisten,
Z) 0 bis 10 Gewichtsteile bezogen auf P, weiterer Zusatzstoffe,
eignen sich als Isoliermaterial, Strukturschaumstoff und zum Einsatz in Verbundelementen und/oder Leichtbauelementen.

## Beschreibung

Die Erfindung betrifft einen wärmeformbeständigen und flammgeschützten Extrusionsschaumstoff auf Basis von thermoplastischen Copolymeren P, enthaltend einpolymerisierte Styrol-, Maleinsäureanhydrid- und Acrylnitril-Monomere wie Styrol-Maleinsäureanhydrid-Copolymere (SMA) oder Styrol-Acrylnitril-Monomere (SAN) und Styrol-Acrylnitril-Maleinsäureanhydrid-Terpolymere (SANMA). Weiterhin betrifft die Erfindung ein Verfahren zur Herstellung des Extrusionsschaumstoffs sowie dessen Verwendung als Isoliermaterial und als Strukturschaumstoff beispielsweise für Leichtbauanwendungen oder in Windkraftanlagen.

Extrusionsschaumstoffe auf Polystyrolbasis werden in großem Maß in der Bauindustrie zum Isolieren von Gebäudeteilen wie Fundamenten, Wänden, Böden und Dächern eingesetzt. Für diese Anwendung werden Extrusionsschaumstoffe benötigt, die eine möglichst geringe Wärmeleitfähigkeit und damit eine große Isolationsfähigkeit besitzen. Um gute Isolationseigenschaften zu erreichen, werden bevorzugt geschlossenzellige Extrusionsschaumstoffe eingesetzt, da diese im Vergleich zu offenzelligen Extrusionsschaumstoffen eine deutlich bessere Isolationsfähigkeit aufweisen.

Für den Einsatz von Extrusionsschaumstoffen in der Bauindustrie wird von diesen neben guten Isolationseigenschaften auch eine gute Wärmeformbeständigkeit bei geringer Dichte erwartet. Vor allem für Anwendungen, bei denen die Schaumstoffe hohen Temperaturen ausgesetzt sind, ist die Wärmeformbeständigkeit sehr wichtig, da es sonst zu Verformungen der Extrusionsschaumstoffe und somit zu einer Beschädigung der Isolierung kommen kann. Bauteile, bei denen eine gute Wärmeformbeständigkeit eine besondere Rolle spielt, sind beispielsweise Dachisolierungen und Wandisolierungen, die direkter Sonneneinstrahlung ausgesetzt sind.

Neben guten Isolationseigenschaften und guter Wärmeformbeständigkeit sollten Extrusionsschaumstoffe auch eine gute Beständigkeit gegenüber Lösungsmitteln, vor allem gegenüber Öl und Mineralöl, aufweisen. Dies ist insbesondere für Bauteile erforderlich, die im unteren Wand-, im Fundament- und im Bodenbereich eingesetzt werden.

Die NL-C 1 005 985 betrifft einen Polymerschaumstoff mit feiner und homogener Zellstruktur, welcher als wesentliche Komponente ein Styrolcopolymer mit einem Anteil von 18 bis 35 mol.-% an Monomereinheiten eines Anhydrides bzw. dessen Imids, beispielsweise eines Styrol-Maleinsäureanhydrid-Copolymers enthält und mit Wasser als Treibmittel geschäumt wird.

Die EP-A 1 479 717 offenbart ein Verfahren zur Herstellung von Schaumstoffplatten auf Basis von Styrol-Acrylnitril-Copolymeren, die eine verbesserte Lösungsmittelbeständigkeit aufweisen. Als Treibmittel oder Treibmittelkomponente wird Wasser, gegebenenfalls in Kombination mit CO₂ und/oder weiteren organischen Treibmitteln eingesetzt. Die nach diesem Verfahren erhältlichen Schaumstoffplatten weisen eine gute Lösungsmittelbeständigkeit auf. Im Hinblick auf die Wärmeformbeständigkeit und die Isolationseigenschaften besteht jedoch noch Verbesserungspotenzial.

Die WO 2011/026979 beschreibt einen geschlossenzelligen Extrusionsschaumstoff, erhältlich durch Extrusion von ein oder mehreren Styrol-Acrylnitril-Copolymeren mit Kohlendioxid als Treibmittel und einem oder mehreren Co-Treibmitteln, ausgewählt aus der Gruppe bestehend aus C₁-C₄-Alkoholen und C₁-C₄-Carbonylverbindungen.

Die WO 2008/069865 beschreibt Styrol-Acrylnitril-Copolymer-Schaumstoffe, die ein oder mehrere Infrarot-absorbierende Additive enthalten und eine hohe Dimensionsstabilität bei höheren Temperaturen aufweisen.

Die JP-A 2007-238926 beschreibt thermoplastische Schaumstoffe mit hoher Wärmeformbeständigkeit, die zur Flammschutzbeständigkeit mit bromierten Flammschutzmitteln, die in der thermogravimetrischen Analyse einen Gewichtsverlust von 5 % bei Temperaturen über 270°C aufweisen, ausgerüstet sind.

Die Aufgabe der Erfindung ist es, einen Extrusionsschaumstoff bereitzustellen, der neben guten Isolationseigenschaften, eine gute Lösungsmittel- und Wärmeformbeständigkeit und insbesondere auch exzellente Flammschutzeigenschaften aufweist, wobei die Verarbeitbarkeit unter dem zugesetzten Flammschutzmittel nicht leiden sollte. Der Extrusionsschaumstoff sollte beispielsweise für die Wärmedämmung von Warmdächern, die mit Bitumenbahnen abgedeckt werden, oder für die Wärmedämmung von Warmwasserspeichern geeignet sein.

Es wurde gefunden, dass sich eine Kombination aus bromierten Trialkylphosphaten wie Tris(tribromneopentyl)phosphat (TTP) und speziellen Synergisten in besonderer Weise als Flammschutzmittel für hochtemperaturbeständige Extrusionsschäume auf Basis von Styrol-Maleinsäureanhydrid-Copolymeren eignet.

In der JP-A 2008-156468 sind Mischungen aus Styrol-Maleinsäureimid-Copolymer und SAN beschrieben, die als Flammschutzmittel eine Mischung aus HBCD (Hexabromcyclododecan) und Tris(tribromneopentyl)phosphat beschreiben. Ein Hinweis auf spezifische Synergisten und die zwingende Anwesenheit von Maleinsäureanhydrid-Monomeren findet sich nicht.

In der JP-A 2008-291181, der JP-A 2007-238926 und der JP 2007-238927 sind Terpolymere aus Styrol, einem ungesättigten Dicarbonsäureanhydrid, wie Maleinsäureanhydrid, und N-Alkylmaleinsäureimiden in Mischung mit SAN enthalten. Als N-Alkylmaleinsäureimid wird auch N-Phenylmaleinsäureimid erwähnt. Als Flammschutzmittel werden verschiedene bromierte Verbindungen, darunter auch TTP, gegebenenfalls in Mischung und gegebenenfalls in Kombination mit einer Antimonverbindung als Synergisten eingesetzt. Ein Hinweis auf die Kombination von TTP mit speziellen Synergisten findet sich nicht.

Demgemäß wurde ein Extrusionsschaumstoff auf Basis von thermoplastischen Polymeren P gefunden, welcher
P1) 50 bis 100 Gewichtsteile, bevorzugt 55 bis 75 Gewichtsteile eines oder mehrerer Styrolcopolymere, welche einpolymerisierte Maleinsäureanhydrid-Einheiten enthalten und einen Styrolgehalt im Bereich von 65 bis 90 Gew.-%, bezogen auf P1, aufweisen,
P2) 0 bis 50 Gewichtsteile, bevorzugt 25 bis 45 eines oder mehrerer Styrol-Acrylnitril-Copolymere (SAN) mit einem Styrolgehalt im Bereich von 65 bis 90 Gew.-%, bezogen auf P2,
P3) 0 bis 15 Gewichtsteile, bevorzugt 0 bis 10 Gewichtsteile eines oder mehrerer thermoplastischen Polymere aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergibt,
F1) 1 bis 10 Gewichtsteile, bevorzugt 2 bis 8 Gewichtsteile, besonders bevorzugt 3 bis 7 Gewichtsteile, bezogen auf P, eines bromierten Trialkylphosphats der Formel (I) als Flammschutzmittel,

   (O)P(OR)₃ (I)

   wobei
   - R: gleich oder verschieden, vorzugsweise gleich, eine geradkettige oder verzweigte Alkylgruppe mit 1 bis 6 Kohlenstoffatomen bedeutet, wobei ein, zwei oder drei Wasserstoffatome durch Brom substituiert sind, bevorzugt 3-Brom-2,2'-bis(brommethyl)-propyl-, 3,4-Dibrom-2-(brommethyl)butyl- oder 2,3-Dibrompropyl-, besonders bevorzugt 3-Brom-2,2'-bis(brommethyl)-propyl- .
F2) 0,01 bis 3 Gewichtsteile, bevorzugt 0,1 bis 1,5 Gewichtsteile, bezogen auf P, an Dicumyl oder eine oder mehrere Verbindungen aus der Gruppe der Hydroxylamine, bevorzugt N-Hydroxysuccinimid, Distearylhydroxylamin, N,N-Dibenzylhydroxylamin, 4-Hydroxy-TEMPO und Anhydride, bevorzugt (+)-O,O'-Diacetyl-L-Weinsäureanhydrid, oder Mischungen davon als Flammschutzsynergisten,
Z) 0 bis 10 Gewichtsteile, bevorzugt 0,1 bis 5 Gewichtsteile, bezogen auf P, weiterer Zusatzstoffe, enthält.

Weiterhin Gegenstand der Erfindung ist ein Verfahren zur Herstellung eines erfindungsgemäßen Extrusionsschaumstoffes, welcher bevorzugt geschlossenzellig ist, eine Dichte von bis zu 150 g/l und eine Zellzahl im Bereich von 1 bis 30 pro mm³ aufweist, umfassend die Schritte
(a) Erhitzen der erfindungsgemäßen Polymere, Flammschutzmittel und gegebenenfalls Zusatzstoffe zur Ausbildung einer Polymerschmelze,
(b) Einbringen eines physikalischen Treibmittels in die Polymerschmelze zur Ausbildung einer schäumbaren Schmelze und
(c) Extrusion der schäumbaren Schmelze in einem Bereich niedrigeren Drucks unter Aufschäumen zu dem Extrusionsschaum.

Weiterhin Gegenstand der Erfindung ist die Verwendung des erfindungsgemäßen Extrusionsschaumstoffs als Isoliermaterial, als Strukturschaumstoff, in Verbund- und/oder in Leichtbauelementen, beispielsweise für Leichtbauanwendungen wie dem Einsatz als Kernmaterial in Windkraftanlagen oder als Kernmaterial in Sandwichelementen für die Möbelindustrie.

Der erfindungsgemäße Extrusionsschaumstoff weist im Allgemeinen eine Zellzahl im Bereich 1 bis 30 Zellen pro mm, bevorzugt von 3 bis 25 Zellen pro mm, insbesondere von 3 bis 20 Zellen pro mm auf.

Die Dichte des erfindungsgemäßen Extrusionsschaumstoffes liegt bevorzugt im Bereich von 20 bis 150 kg/m³, besonders bevorzugt im Bereich von 20 bis 60 kg/m³.

In der Regel weist der erfindungsgemäße Extrusionsschaumstoff eine Druckfestigkeit, gemessen nach DIN EN 826, im Bereich von 0,15 bis 6 N/mm2, bevorzugt im Bereich von 0,3 bis 1 N/mm2, auf.

Der erfindungsgemäße Extrusionsschaumstoff ist bevorzugt geschlossenzellig, d.h. dass die Zellen gemessen nach DIN ISO 4590 zu mindestens 90 %, insbesondere zu 95-100% geschlossen sind.

Der erfindungsgemäße Extrusionsschaumstoff ist flammgeschützt und erfüllt beispielsweise die Anforderungen von genormten Brandtests nach DIN 4102 B2 und europäischer Einstufung (Class E).

Die erfindungsgemäß als Polymerkomponente P eingesetzten Styrolcopolymere (P1), welche einpolymerisierte Maleinsäureanhydrid-Einheiten enthalten, Styrolacrylnitrilcopolymere (SAN) (P2) und die thermoplastischen Polymere (P3) können nach dem Fachmann bekannten Verfahren, beispielsweise durch radikalische, anionische oder kationische Polymerisation in Substanz, Lösung, Dispersion oder Emulsion hergestellt werden. Bevorzugt ist im Falle von SAN und SMA die Herstellung durch radikalische Polymerisation.

Bevorzugt weisen die Polymere P1 als auch Mischungen mit der thermoplastischen Polymeren P eine Glasübergangstemperatur Tg von 120 °C oder höher, bevorzugt im Bereich von 125 bis 210 °C, gemessen mittels DSC nach DIN 53765 (ISO 11357-2) bei einer Aufheizrate von 20 K/min, auf. Die Glasübergangstemperatur kann mittels dynamischer Differenzkalorimetrie (Differential Scanning Calorimetry, DSC) bei einer Aufheizrate von 20 K/min bestimmt werden.

Der erfindungsgemäße Extrusionsschaumstoff enthält als Komponente (P1) 50 bis 100 Gewichtsteile, bevorzugt 55 bis 75 Gewichtsteile eines oder mehrerer Styrolcopolymeren, welche einpolymerisierte Maleinsäureanhydrid-Einheiten enthalten und einen Styrolgehalt im Bereich von 65 bis 90 Gew.-%, bezogen auf P1, aufweisen.

Die Komponente (P1) besteht aus einem oder mehreren, bevorzugt einem Styrolcopolymer, welches einpolymerisierte Maleinsäureanhydrid-Einheiten enthält. Vorzugsweise besteht P1 aus 10 bis 45 Gew.-%, bevorzugt 15 bis 30 Gew.-% einpolymerisiertem Maleinsäureanhydrid und 55 bis 90 Gew.-%, bevorzugt 70 bis 85 Gew.-% einpolymerisiertem, vinylaromatischen Monomer, insbesondere Styrol.

In einer bevorzugten Ausführungsform besteht das oder die Polymere der Komponente P1 aus einpolymerisierten Styrol- und Maleinsäureanhydrid-Einheiten.

In einer weiteren Ausführungsform enthält mindestens ein Polymer der Komponente P1 mindestens eine weitere einpolymerisierte Monomereinheit. Bevorzugt ist dabei als einpolymerisierte Monomereinheit Acrylnitril. Bevorzugt in dieser Ausführungsform besteht die Komponente P1 aus mindestens einem Polymer bestehend aus 50 bis 90 Gew.-% einpolymerisierten Styroleinheiten, 5 bis 25 einpolymerisierten Maleinsäureanhydrid-Einheiten und 5 bis 25 einpolymerisierten Acrylnitrileinheiten, gegebenenfalls in Mischung mit mindestens einem Polymer bestehend aus einpolymerisierten Stryol- und Maleinsäureanhydrid-Einheiten.

Neben einpolymerisiertem Styrol und Maleinsäureanhydrid enthält die Komponente P1 in einer weiteren Ausführungsform der Erfindung 10 bis 35 Gew.-%, bevorzugt 10 bis 30 Gew.-%, besonders bevorzugt 15 bis 30 Gew.-%, bezogen auf P1), von Maleinsäureimiden abgeleitete Einheiten, wobei diese durch Einpolymerisieren von monomeren Maleinsäureimiden oder durch Derivatisierung einpolymerisierter Maleinsäureanhydridmonomere erzeugt werden. Bevorzugte Maleinsäureimide sind Maleinsäureimid selbst, N-Alkyl-substituierte Maleinsäureimide (vorzugsweise mit C₁-C₆-Alkly) und N-Phenyl-substituierte Maleinsäureimide

In einer weiteren bevorzugten Ausführungsform enthält die Komponente P1 keine von Maleinsäureimiden abgeleiteten Einheiten.

Besonders geeignet als Komponente P1 sind Styrol-Maleinsäureanhydrid-Copolymere (SMA). Geeignet sind weiterhin Styrol-Acrylnitril-Maleinsäureanhydrid-Terpolymere (SANMA) und Styrol-Maleinsäureanhydrid-N-Phenylmaleinsäureimid-Terpolymere.

Der erfindungsgemäße Extrusionsschaumstoff enthält als Komponente (P2) 0 bis 50 Gewichtsteile, bevorzugt 25 bis 45 eines oder mehrerer Styrol-Acrylnitril-Copolymere (SAN) mit einem Styrolgehalt im Bereich von 65 bis 90 Gew.-%, bezogen auf (P2).

Die SAN Komponente (P2) enthält - soweit vorhanden - im Allgemeinen 18 bis 40 Gew.-%, bevorzugt 22 bis 35 Gew.-% einpolymerisiertes Acrylnitril und im Allgemeinen 60 bis 82 Gew.-%, bevorzugt 65 bis 78 Gew.-% einpolymerisiertes Styrol (jeweils bezogen auf SAN).

Das SAN (P2) kann gegebenenfalls 0 bis 22 Gew.-% mindestens eines einpolymerisierten Monomers aus der Gruppe bestehend aus Alkyl(meth)acrylaten, (Meth)acrylsäure und Maleinimiden enthalten. In einer bevorzugten Ausführungsform besteht das SAN ausschließlich aus einpolymerisiertem Styrol und Acrylnitril.

Die erfindungsgemäß eingesetzten SAN-Copolymere (P2) weisen im Allgemeinen eine Schmelzvolumenrate MVR (220°C/ 10 kg) nach ISO 113 im Bereich von mehr als 5 cm³ / 10 min auf, bevorzugt mehr als 20 cm³ / 10 min und besonders bevorzugt mehr als 50 cm³ / 10 min.

Geeignete SAN-Typen sind beispielsweise Luran® 3380, Luran® 33100, Luran® 2580, Luran® 2560 und Luran® VLN der Styrolution GmbH.

Bevorzugt werden mittelviskose und niedrigviskose Typen der Polymere (P1) und (P2) eingesetzt. Bevorzugt liegt die Viskositätszahl, gemessen nach DIN 53737 im Bereich von 40 bis 80 ml/g (gemessen in einer 0,5 gew.-%igen Lösung in Dimethylformamid bei 23°C).

Der erfindungsgemäße Extrusionsschaumstoff enthält als Komponente (P3) 0 bis 15 Gewichtsteile, bevorzugt 0 bis 10 Gewichtsteile eines oder mehrerer thermoplastischen Polymeren aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden.

Als thermoplastische Polymere (P3) der Polymerkomponente P werden gegebenenfalls Styrolpolymere und -copolymere, beispielsweise Acrylnitril-Butadien-Styrol (ABS), Acrynitril-Styrol-Acrylester (ASA) und Styrol-Methacrylsäure; Polyolefine beispielsweise Polypropylen (PP) Polyethylen (PE) und Polybutadien; Polyacrylate beispielsweise Polymethylmethacrylat (PMMA); Polycarbonate (PC); Polyester beispielsweise Polyethylenterephthalat (PET) und Polybutylenterephthalat (PBT); Polyamide beispielsweise Polyamid 6 (PA6), Polyamid 6,6, Polyamid 6,1 und Polyamid 6/6,6; Polyethersulfone (PES); Polyetherketone (PEK); Polyethersulfide oder Mischungen davon eingesetzt.

In einer bevorzugten Ausführungsform ist der erfindungsgemäße Extrusionsschaumstoff ausschließlich aus den Polymerkomponenten (P1) und (P2) aufgebaut und enthält kein (0 Gew.-%) thermoplastisches Polymer P3.

Aufgrund der Brandschutzbestimmungen in der Bauindustrie und anderen Branchen werden ein oder mehrere Flammschutzmittel zugegeben. Ein ausreichender Flammschutz (B2-Test nach DIN 4102 Teil 1) wird erreicht durch ein bromiertes Flammschutzmittel mit einem thermogravimetrisch (TGA) ermittelten Gewichtsverlust von höchstens 2 Gew.-% bei 250 °C, bevorzugt 1 Gew.-% bei 260 °C, besonders bevorzugt 1 Gew.-% bei 280 °C. Erfindungsgemäß enthält der Extrusionsschaumstoff daher zusätzlich 1 bis 10 Gewichtsanteile, bevorzugt 2 bis 8 Gewichtsteile, besonders bevorzugt 3 bis 7 Gewichtsteile, bezogen auf 100 Gewichtsteile P, eines bromierten Trialkylphosphats der Formel (I) als Flammschutzmittel (F1),

(O)P(OR)₃ (I)

wobei
- R: gleich oder verschieden, vorzugsweise gleich, eine geradkettige oder verzweigte Alkylgruppe mit 1 bis 6 Kohlenstoffatomen bedeutet, wobei ein, zwei oder drei Wasserstoffatome durch Brom substituiert sind, bevorzugt 3-Brom-2,2'-bis(brommethyl)-propyl-, 3,4-Dibrom-2-(brommethyl)butyl- oder 2,3-Dibrompropyl-, besonders bevorzugt 3-Brom-2,2'-bis(brommethyl)-propyl-.

Bevorzugt sind Tris(tribromneopentyl)phosphat (R = 3-Brom-2,2'-bis(brommethyl)-propyl) (TPP) und Tris(2,3-dibrompropyl)phosphat (R = 2,3-Dibrompropyl), besonders bevorzugt ist TPP (II):

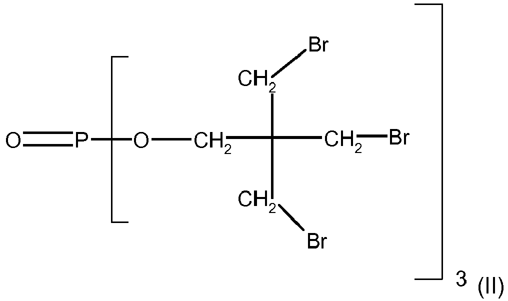

TTP ist kommerziell erhältlich, beispielsweise unter der Bezeichnung FR370 von der Firma ICL, Tel Aviv, Israel.

Als Flammschutzsynergist (F2) enthält der Extrusionsschaumstoff erfindungsgemäß zusätzlich 0,01 bis 3 Gewichtsanteile, bevorzugt 0,1 bis 1,5 Gewichtsteile, bezogen auf 100 Gewichtsteile P, eines Synergisten aus der Gruppe bestehend aus Dicumyl, N-Hydroxysuccinimid, Distearylhydroxylamin, N,N'-Dibenzylhydroxylamin, 4-Hydroxy-TEMPO (2,2,6,6-Tetramethylpiperidinylopxy = TEMPO), (+)-O,O'-Diacetyl-L-Weinsäureanhydrid und Mischungen davon. Bevorzugt besteht der Synergist (F2) aus Dicumyl.

Die Flammschutzsynergisten (F2) sind kommerzielle Produkte. Dicumyl ist beispielsweise unter der Bezeichnung Perkadox 30 von AkzoNobel, Niederlande, erhältlich.

Erfindungsgemäß insbesondere bevorzugt ist eine Kombination aus TPP als Flammschutzmittel (F1) und Dicumyl als Flammschutzsynergist (F2).

Gewünschtenfalls kann der Extrusionsschaumstoff zusätzlich 0 bis 25, bevorzugt bis 10 Gewichtsteile, bezogen auf 100 Gewichtsteile P, weiterer Zusatzstoffe (Z), wie Nukleierungsmittel, Füllstoffe (beispielsweise mineralische Füllstoffe wie Glasfasern), Weichmacher, IR-Absorber wie Ruß, Graphit (synthetischen oder natürlichen), Kokse wie Petrolkoks, Graphen, Aluminiumpulver und Titandioxid, lösliche und unlösliche Farbstoffe sowie Pigmente enthalten. Bevorzugt wird Graphit und Ruß in Mengen von im Allgemeinen 0,05 bis 25 Gewichtsteilen, insbesondere bevorzugt in Mengen von 2 bis 8 Gewichtsteile, bezogen auf 100 Gewichtsteile P zugegeben werden. Geeignete Teilchengrößen für das Graphit liegen im Bereich von 1 bis 50 µm, bevorzugt im Bereich von 2 bis 10 µm.

Als ein wichtiger Aspekt für die Gewährleistung konstanter Produkteigenschaften hat sich der Einsatz von UV-Stabilisatoren erwiesen. Speziell bei SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität mit SMA eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem. Bei erhöhten Temperaturen kann der Zusatz von sterisch gehinderten Aminen zu einer Reaktion mit SMA unter Abspaltung gasförmiger Reaktionsprodukte führen.

Bevorzugt enthält der Extrusionsschaumstoff als Zusatzstoff (Z) einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer P.

Weiterhin vorteilhaft ist die Zugabe von Vernetzungsinhibitoren wie Phosphiten, Phosphiniten, Phosphanen und/oder Metallstearaten. Bevorzugt sind Phosphite, besonders bevorzugt Tris(2,4-di-tert-butylphenyl)phosphit, und am Stickstoff mit phosphithaltigen Gruppen funktionalisierte Cyanurate, insbesondere 1,3,5-Tris(2-hydroxyethyl)cyanursäure-diphenylphosphinit. Tris(2,4-di-tert-butylphenyl)phosphit ist zum Beispiel unter der Bezeichnung Irgafos 168 von der BASF SE kommerziell erhältlich.

Als Nukleierungsmittel können feinteilige, anorganische Feststoffe wie Talkum, Metalloxide, Silikate oder Polyethylenwachse in Mengen von im Allgemeinen 0,1 bis 10 Gewichtsanteilen bevorzugt 1 bis 3 Gewichtsanteilen bezogen auf P, eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum.

Zur Verbesserung der Wärmedämmung ist insbesondere die Zugabe von IR-Absorbern, wie, Graphit (synthetisch oder natürlich), Koks wie Petrolkoks, Graphen, Ruß, Aluminiumpulver, Titandioxid, Indoanilin-Farbstoffe, Oxonol-Farbstoffe oder Anthrachinon-Farbstoffe geeignet.

Bevorzugte Weichmacher sind Fettsäureester, Fettsäureamide und Phthalate, die in Mengen von 0,05 bis 10 Gewichtsanteilen, bezogen auf die Polymerkomponente P, eingesetzt werden können.

Weiterhin Gegenstand der Erfindung ist ein Verfahren zur Herstellung des erfindungsgemäßen Extrusionsschaumstoffs, umfassend die Stufen
(a) Erzeugen einer Polymerschmelze aus thermoplastischen Polymeren P enthaltend
   P1) 50 bis 100 Gewichtsteile, bevorzugt 55 bis 75 Gewichtsteile eines oder mehrerer Styrolcopolymere, welche einpolymerisierte Maleinsäureanhydrid-Einheiten enthalten und einen Styrolgehalt im Bereich von 65 bis 90 Gew.-%, bezogen auf P1, aufweisen,
   P2) 0 bis 50 Gewichtsteile, bevorzugt 25 bis 45 eines oder mehrerer Styrol-Acrylnitril-Copolymere (SAN) mit einem Styrolgehalt im Bereich von 65 bis 90 Gew.-%, bezogen auf P2,
   P3) 0 bis 15 Gewichtsteile, bevorzugt 0 bis 10 Gewichtsteile eines oder mehrerer thermoplastischen Polymere aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden,
      wobei die Summe aus den Polymerkomponenten (P1), (P2) und (P3) der thermoplastischen Polymeren P 100 Gewichtsteile ergeben,
   F1) 1 bis 10 Gewichtsanteile, bevorzugt 2 bis 8 Gewichtsteile, besonders bevorzugt 3 bis 7 Gewichtsteile, bezogen auf P, eines Trialkylphophats der Formel (I) als Flammschutzmittel, bevorzugt Tris(tribromneopentyl)phosphat,
   F2) 0,01 bis 3 Gewichtsanteile, bevorzugt 0,1 bis 1,5 Gewichtsteile, bezogen auf P, an Dicumyl oder eine Verbindung aus der Gruppe der Hydroxylamine, wie N-Hydroxysuccinimid, Distearylhydroxylamin, N,N'-Dibenzylhydroxylamin, 4-Hydroxy-TEMPO, Anhydride wie (+)-O,O'-Diacetyl-L-Weinsäureanhydrid, oder Mischungen davon als Flammschutzsynergisten,
   Z) 0 bis 10 Gewichtsteile, bevorzugt 0,1 bis 5 Gewichtsteile, bezogen auf 100 Gewichtsteile P, weiterer Zusatzstoffe,
(b) Einbringen einer Treibmittelkomponente T, enthaltend vorzugsweise 1 bis 12 Gewichtsteile, bezogen auf 100 Gewichtsteile P, eines Treibmittels enthaltend Kohlendioxid und insbesondere
   T1) 1 bis 5 Gewichtsteile, bezogen auf 100 Gewichtsteile P, Kohlendioxid als Treibmittel,
   T2) 1 bis 5 Gewichtsteile, bezogen auf 100 Gewichtsteile P, Aceton als Co-Treibmittel,
   T3) 0 bis 1 Gewichtsteile, bezogen auf 100 Gewichtsteile P, eines oder mehrerer Co-Treibmittel ausgewählt aus der Gruppe bestehend aus C₁-C₄ Alkanen.
      in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

Bevorzugt besteht die Polymerschmelze ausschließlich aus den Komponenten (P1) und (P2) in Bezug auf die thermoplastischen Polymere P.

In Stufe (a) des Verfahrens wird die Polymerkomponente P erhitzt, um eine Polymerschmelze zu erhalten. Unter Ausbildung einer Polymerschmelze wird im Rahmen der Erfindung eine Plastifizierung der Polymerkomponente P im weiteren Sinne verstanden, d.h. die Überführung der festen Bestandteile der Polymerkomponente P in einen verformbaren oder fließfähigen Zustand. Dazu ist es notwendig, dass die Polymerkomponente P auf eine Temperatur oberhalb der Schmelz- beziehungsweise Glasübergangstemperatur erhitzt wird. Geeignete Temperaturen betragen im Allgemeinen mindestens 150°C, bevorzugt 160 bis 290°C, besonders bevorzugt 220 bis 260°C.

Die Temperatur der Polymerschmelze sollte so gering wie möglich gehalten werden, bevorzugt unter 260 °C. Bei höheren Temperaturen folgende Effekte auftreten: (i) CO₂ kann unkontrolliert durch Reaktion von Styrol-Maleinsäureanhydrid-Copolymer (SMA) abgespalten und die Einstellung exakter Treibmittelmengen erschweren. (ii) Mischungen aus Styrol-Acrylnitril-Copolymeren (SAN) und Styrol-Maleinsäureanhydrid-Copolymer (SMA) können bei erhöhten Temperaturen zu Vernetzungen führen.

Das Erhitzen der Polymerkomponente P (Stufe (a) des erfindungsgemäßen Verfahrens) kann mittels beliebiger Einrichtungen, die auf dem Fachgebiet bekannt sind, wie mittels eines Extruders, eines Mischers (zum Beispiel eines Kneters) erfolgen. Bevorzugt ist der Einsatz von Aufschmelzextrudern (Primärextrudern). Stufe (a) des erfindungsgemäßen Verfahrens kann kontinuierlich oder diskontinuierlich durchgeführt werden, wobei eine kontinuierliche Fahrweise bevorzugt ist.

In Stufe (a) werden der Polymerschmelze die Komponenten (F1), (F2) und gegebenenfalls weitere Zusatzstoffe (Z), in den wie oben beschrieben Mengen, zugegeben. Möglich ist auch die Zugabe nach Stufe (a) oder Zugabe in Mischungen mit den Treibmittelkomponenten.

Stufe (b) des erfindungsgemäßen Verfahrens umfasst das Einbringen einer Treibmittelkomponente T in die in Stufe (a) hergestellte Polymerschmelze zur Ausbildung einer schäumbaren Schmelze. Bevorzugt ist das Einbringen von 1 bis 11 Gewichtsteilen (bezogen auf 100 Gewichtsteile P) einer Treibmittelkomponente enthaltend Kohlendioxid.

Erfindungsgemäß werden als Treibmittel (T1) vorzugsweise 1 bis 5 Gewichtsteile, bevorzugt, 2,5 bis 4,5 Gewichtsteile, bezogen auf 100 Gewichtsteile P, Kohlendioxid eingesetzt.

Als Co-Treibmittel T(2) werden vorzugsweise zusätzlich 1 bis 5 Gewichtsteile, bevorzugt 1 bis 3 Gewichtsteile, bezogen auf 100 Gewichtsteile P, Aceton zugegeben.

Als weitere Co-Treibmittel (T3) können vorzugsweise 0 bis 1,0 Gewichtsteile, bevorzugt 0,2 bis 1,0 Gewichtsteile, bezogen auf 100 Gewichtsteile P, eines oder mehrerer Co-Treibmittel ausgewählt aus der Gruppe bestehend aus C₁-C₄ Alkanen zugegeben werden. Besonderes bevorzugt wird Isobutan als Co-Treibmittel (T3).

Die erfindungsgemäß eingesetzten Treibmittel und Co-Treibmittel führen insbesondere bei hohen Plattendicken zu besseren Oberflächen und Dimensionsstabilität. Die Anwesenheit von Aceton bzw. Alkanen ermöglicht eine stärkere Plastifizierung während der Schmelzeverarbeitung und Kalibrierung.

In den Treibmitteln und Co-Treibmitteln (T1), (T2) und (T3) kann Wasser enthalten sein. Wasser gelangt in die Treibmittelkomponente T vor allem durch die Verwendung von technischen Chemikalien.

In einer bevorzugten Ausführungsform sind die Treibmittel im Wesentlichen wasserfrei. Besonders bevorzugt sind Mischungen von Kohlendioxid und Aceton als auch Mischungen von Kohlendioxid, Aceton und iso-Butan. Bevorzugt weist die Polymerschmelze nach Stufe b) einen Wassergehalt von maximal 1 Gew.-%, besonders bevorzugt von weniger als 0,1 Gew.-% auf. Die Treibmittelkomponente T wird der Polymerschmelze in einem Anteil von insgesamt 1 bis 11 Gewichtsteilen, bevorzugt 1 bis 8 und insbesondere bevorzugt 1,5 bis 7 Gewichtsteilen (jeweils bezogen auf P) zugesetzt.

Die Treibmittel (T1), (T2) und (T3) können in die geschmolzene Polymerkomponente P durch jede dem Fachmann bekannte Methode eingebracht werden. Geeignet sind beispielsweise Extruder oder Mischer (zum Beispiel Kneter). In einer bevorzugten Ausführungsform wird das Treibmittel mit der geschmolzenen Polymerkomponente P unter erhöhtem Druck gemischt. Der Druck muss dabei so hoch sein, dass im Wesentlichen ein Aufschäumen des geschmolzenen Polymermaterials verhindert und eine homogene Verteilung der Treibmittelkomponente T in der geschmolzenen Polymerkomponente P erreicht wird. Geeignete Drücke sind 50 bis 500 bar (absolut), bevorzugt 100 bis 300 bar (absolut), besonders bevorzugt 150 bis 250 bar (absolut). Die Temperatur in Stufe (b) des erfindungsgemäßen Verfahrens muss so gewählt sein, dass das polymere Material im geschmolzenen Zustand vorliegt. Dazu ist es notwendig, dass die Polymerkomponente P auf eine Temperatur oberhalb der Schmelz- beziehungsweise Glasübergangstemperatur erhitzt wird. Geeignete Temperaturen betragen im Allgemeinen mindestens 150 °C, bevorzugt 160 bis 290 °C, besonders bevorzugt 220 bis 260 °C. Stufe (b) kann kontinuierlich oder diskontinuierlich durchgeführt werden, bevorzugt wird Stufe (b) kontinuierlich durchgeführt.

Die Zugabe der Treibmittel kann im Aufschmelzextruder (Primärextruder) oder in einer nachgelagerten Stufe erfolgen. Bevorzugt erfolgt die Zugabe der Treibmittel direkt im Aufschmelzextruder.

In einer bevorzugten Ausführungsform wird die schäumbare Polymerschmelze in dem Fachmann bekannten XPS-Extrudern durchgeführt, beispielsweise über einen Tandem-Aufbau aus Aufschmelzextruder (Primärextruder) und Kühlextruder (Sekundärextruder). Das Verfahren kann kontinuierlich und diskontinuierlich durchgeführt werden, wobei die Polymerkomponente P im Primärextruder aufgeschmolzen wird (Stufe (a)) und die Zugabe des Treibmittels (Stufe (b)) zur Ausbildung einer schäumbaren Schmelze ebenfalls im Primärextruder erfolgt. Die Einmischung und Lösung des Treibmittels kann auch über statische Mischorgane nach Stufe (a) erfolgen, beispielsweise durch statische Mischer.

Stufe (c) des erfindungsgemäßen Verfahrens umfasst das Aufschäumen der schäumbaren Schmelze, um einen Extrusionsschaumstoff zu erhalten. Dazu wird die mit Treibmittel versehene schäumbare Schmelze im Sekundärextruder auf eine für das Schäumen geeignete Temperatur gekühlt. Zudem kann das Kühlen der Schmelze teilweise oder vollständig durch statisch arbeitende Schmelzekühler, beispielsweise statische Wärmetauscher (z.B. verfügbar von Fa. Fluitec oder Fa. Sulzer) erfolgen.

Die Schmelze wird dazu durch eine geeignete Vorrichtung, beispielsweise eine Düsenplatte, gefördert. Die Düsenplatte wird bevorzugt auf mindestens 10 °C über der Temperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 100 °C über der Temperatur der treibmittelhaltigen Polymerschmelze

Die treibmittelhaltige Polymerschmelze wird durch die Düsenplatte in einen Bereich überführt, in dem ein niedrigerer Druck herrscht als in demjenigen Bereich, in dem die schäumbare Schmelze vor Extrusion durch die Düse gehalten wird. Der niedrigere Druck kann überatmosphärisch oder unteratmosphärisch sein. Bevorzugt ist die Extrusion in einen Bereich mit atmosphärischem Druck.

Stufe (c) wird ebenfalls bei einer Temperatur durchgeführt, bei der das zu schäumende polymere Material in geschmolzenem Zustand vorliegt, im Allgemeinen bei Temperaturen von 80 bis 180 °C, bevorzugt bei 80 bis 170 °C, besonders bevorzugt bei 110 bis 160 °C. Dadurch, dass die treibmittelhaltige Polymerschmelze in Stufe (c) in einen Bereich überführt wird, in dem ein niedrigerer Druck herrscht, wird das Treibmittel in den gasförmigen Zustand überführt. Durch den großen Volumenanstieg wird die Polymerschmelze ausgedehnt und aufgeschäumt. Der Druck an der Düse muss ausreichend hoch gewählt werden, um ein vorzeitiges Aufschäumen in der Düse zu vermeiden. Dazu sind Drücke von mindestens 50 bar, bevorzugt 60 - 180 bar, besonders bevorzugt 80 - 140 bar, geeignet.

Die geometrische Form des Querschnitts der nach dem erfindungsgemäßen Verfahren erhältlichen Extrusionsschaumstoffe wird im Wesentlichen durch die Wahl der Düsenplatte und ggf. durch geeignete Nachfolgeeinrichtungen wie Plattenkalibrierungen, Rollenbahnabzüge oder Bandabzüge bestimmt und ist frei wählbar.

Die Oberflächenqualität hängt bei Verwendung der erfindungsgemäßen Material- und Treibmittelzusammensetzung von der Oberflächentemperatur der Kalibriereinrichtung ab. Oberflächentemperaturen unterhalb von 50 °C führen zu starker Auskühlung der Schaumoberfläche und in der Folge zur Bildung von Längs- und Querrissen als auch zu Dickenunterschieden zwischen Rand und Mitte der Platte. Bevorzugt werden daher Kalibriereinrichtungen eingesetzt, die durch externe Quellen wie Öltemperierungen oder elektrischen Temperierungen beheizt werden können. Die Oberflächentemperaturen betragen bevorzugt mehr als 50 °C, besonders bevorzugt mehr als 100 °C. Bevorzugt ist zudem der Einsatz antihaftender Oberflächen, beispielsweise teflonbeschichtete Metalle oder mit Teflonfolien abgedeckte Metalle.

Die nach dem erfindungsgemäßen Verfahren erhältlichen Extrusionsschaumstoffe weisen bevorzugt einen rechtwinkligen Querschnitt auf. Die Dicke der Extrusionsschaumstoffe wird dabei durch die Höhe des Düsenplattenschlitzes bestimmt. Die Dicke beträgt 20 - 300 mm, bevorzugt 20 - 200 mm. Die Breite der Extrusionsschaumstoffe wird durch die Breite des Düsenplattenschlitzes bestimmt. Die Länge der Extrusionsschaumstoffteile wird in einem nachgelagerten Arbeitsschritt durch bekannte dem Fachmann geläufige Verfahren wie Verkleben, Verschweißen, Zersägen und Zerschneiden bestimmt. Insbesondere bevorzugt sind Extrusionsschaumstoffteile mit einer plattenförmigen Geometrie. Plattenförmig bedeutet, dass die Abmessung der Dicke (Höhe) im Vergleich zu der Abmessung der Breite und der Abmessung der Länge des Formteils klein ist.

Für die Verbesserung der UV-Beständigkeit des Materials, zur Erhöhung der Oberflächenqualität und zur Reduzierung der Oberflächentemperatur können zudem Folienbeschichtungen im Anschluss an die Kalibrierung auf das Material aufgebracht werden. Die Folien enthalten vorzugsweise UV-Stabilisatoren und / oder Licht-Absorber und / oder Reflektoren und / oder Flammschutzmittel in erhöhter Konzentration im Vergleich zum geschäumten Material.

Gegenstand der Erfindung ist auch die Verwendung der erfindungsgemäßen Extrusionsschaumstoffe und der daraus erhältlichen Formkörper. Bevorzugt ist die Verwendung als Isoliermaterial insbesondere in der Bauindustrie, unter- und oberirdisch, zum Beispiel für Fundamente, Wände, Böden und Dächer. Bevorzugt ist ebenfalls die Verwendung als Strukturschaum, insbesondere für Leichtbauanwendungen und als Kernmaterial für Verbundanwendungen.

Der erfindungsgemäße Extrusionsschaumstoff weist gute Isolationseigenschaften, gute Lösungsmittel- und insbesondere eine gute Wärmeformbeständigkeit auf. Bevorzugt ist die Verwendung als Isoliermaterial insbesondere in der Bauindustrie, unter- und oberirdisch, z.B. für Fundamente, Wände, Böden und speziell Dächer. Er vereint damit drei wichtige Eigenschaften in einem Werkstoff und ermöglicht somit den universellen Einsatz dieses Werkstoffs in den unterschiedlichsten Anwendungen, bei denen bisher der Einsatz verschiedener und für den jeweiligen Einsatz speziell angepasster Werkstoffe notwendig war. Der erfindungsgemäße Extrusionsschaumstoff kann vorzugsweise für die Wärmedämmung von Dächern eingesetzt werden, die sowohl während der Installation (Kontakt mit heißem Bitumen) und während der Lebenszeit (erhöhte Gebrauchstemperatur durch Abdeckung mit stark absorbierender Bitumenbahn) erfordern. Weitere Anwendungsmöglichkeiten sind die Dämmung von Warmwasserspeichern und der Einsatz für Leichtbauanwendungen, beispielsweise als Kernmaterial für Sandwichanwendnungen.

Dabei dient der erfindungsgemäße Extrusionsschaumstoff bevorzugt zur Herstellung von Sandwichelementen bevorzugt aus mindestens einem Kernmaterial und mindestens einer Deckschicht, wobei das Kernmaterial aus einem erfindungsgemäßen Extrusionsschaumstoff hergestellt wird und sich die Sandwichelemente besonders aufgrund ihrer hohen Temperaturbeständigkeit auszeichnen. Bevorzugt ist die Verwendung des Schaumes und der Sandwichelemente neben der Bauindustrie auch im Möbelbau, Messebau, der Automobilindustrie, im Boots- und Schiffbau und für den Bau von Windkraftanlagen.

Der erfindungsgemäße Extrusionsschaumstoff ist ohne den Einsatz von Treibmitteln, die aus Umweltgesichtspunkten oder in Bezug auf die Brandschutzbestimmungen problematisch sind, zugänglich. Darüber hinaus bietet er trotz niedriger Dichte im Vergleich zu den Extrusionsschaumstoffen aus dem Stand der Technik gute Isolationseigenschaften und mechanische Eigenschaften bei gleichzeitig hoher Lösungsmittel- und Wärmeformbeständigkeit, die in der Regel mindestens 20 °C über gewöhnlichem Polystyrol-Extrusionsschaumstoff (XPS) liegt. Beispielsweise liegt die Dimensionsstabilität ohne mechanische Belastung bei mindestens 100 °C (max. zulässige Dimensionsänderung < 3 %).

### Beispiele

### Allgemeine Arbeitsvorschrift

Die Herstellung der erfindungsgemäßen Schaumstoffplatten erfolgte auf einer Tandem-Extrusionsanlage. Die eingesetzten Copolymere wurden zusammen mit Flammschutzmittel und Additiven kontinuierlich einem Aufschmelzextruder zugeführt. Die Flammschutzmittel lagen als Batches vor. Durch eine in dem Aufschmelzextruder (ZSK 120) eingebrachte Injektionsöffnung wurden kontinuierlich die Treibmittel (CO₂, Aceton, i-Butan) zugeführt. Der Gesamtdurchsatz einschließlich der Treibmittel betrug ca. 750 kg/h. Die treibmittelhaltige Schmelze wurde in einem nachfolgenden Kühlextruder (ZE 400) abgekühlt und durch eine Schlitzdüse extrudiert. Die aufschäumende Schmelze wurde durch eine beheizte Kalibrierung, deren Oberflächen mit Teflon ausgestattet waren, über ein Rollenband abgezogen und zu Platten geformt. Typische Plattendimensionen vor der mechanischen Bearbeitung lagen bei ca. 700 mm Breite und 50 mm Dicke.

Eingesetzte Rohstoffe (alle %-Angaben sind Gewichtsprozente)
- Xiran^{®} SZ26080:: SMA mit einem Maleinsäureanhydridgehalt von 26 % und einem MFR (240 °C, 10 kg) von 58 g/10 min (Handelsprodukt der Polyscope Polymers B.V.)
- Luran^{®} 2580:: SAN mit einem Acrylnitrilgehalt von 25 % und einer Viskositätszahl von ca. 80 ml/g (Handelsprodukt der Styrolution GmbH)
- Luran^{®} VLN:: SAN mit einem Acrylnitrilgehalt von ca. 25 % und einer Viskositätszahl von ca. 65 ml/g (Handelsprodukt der Styrolution GmbH)
- PS 158K Q4: Polystyrol mit einem MVR (200 °C, 5 kg) von 3 ml/10 min und einer Vicaterweichungstemperatur (VST/A/50) von 106 °C (Handelsprodukt der Styrolution GmbH)
- FR370:: Tris(tribromoneopentyl)phosphat (TTP), mit TGA % Gewichtsverlust von 1 % bei 282 °C (Handelsprodukt der ICL Israel Chemicals Ltd.)
- Perkadox^{®} 30:: Dicumyl, (Handelsprodukt der Akzo Nobel)
- Irgafos^{®} 168:: Tris-(2,4-di-tert-butylphenyl)phosphit (Handelsprodukt der BASF SE)
- Ultrafine: Antimontrioxid Ultrafine, (Handelsprodukt der Campine N.V.)
- Batch 1: Dicumyl in SAN (Luran^{®} 2580) (25 %)
- Batch 2: Poly(tetrabrombisphenyl-A-glycidyl)ether (FR2400) in SAN (Luran^{®} 2580) (78 %)
- Batch 3: TTP (FR 370) in SAN (Luran^{®} VLN) (40 %)
- Batch 4: Tris(2,4-di-tert-butylphenyl)phosphit (Irgafos 168) in Polystyrol 158K Q4 (40 %)
- Batch 5: Talkum (Handelsprodukt der Luzenac Pharma) in Polystyrol 158K Q4 (50 %)
- Batch 6: Antimontrioxid in Luran^{®} 2580 (50 %)

### B2-Brandtests:

Zur Überprüfung der flammgeschützten Wirkung der Proben wurden B2-Tests durchgeführt. Tabelle 1 führt die untersuchten Rezepturen im Detail auf, die nachfolgende Tabelle 2 enthält die Prüfergebnisse der Brandtests. Hierbei befindet sich in der letzten Spalte von Tabelle 2 die abschließende Einstufung, ob der B2-Test bestanden wurde oder nicht (Ja/Nein). Die Einstellungen V1 und V5 stellen weiterhin Referenzmuster mit einem gängig verwendeten Flammschutzmittel der ICL (Poly(tetrabrombisphenyl-A-glycidyl)ether (FR2400)) inklusive einem gängigen Synergist (ATO) dar - hieraus sieht man die signifikant verringerten Mengen an Flammschutzmittel und Synergist bei Verwendung des erfindungsgemäßen Systems.

**Tabelle 1: Zusammensetzungen der untersuchten Rezepturen**

| Beispiel | | V1 | V2 | V3 | V4 | 1 | 2 | 3 | 4 | 5 | 6 | 7 | V5 |
|---|---|---|---|---|---|---|---|---|---|---|---|---|---|
| Einsatzstoffe | | | | | | | | | | | | | |
| Bezeichnung | Komponente | | | | | | | | | | | | |
| Luran 25100 | P2 | 40 | 40 | 40 | 40 | 40 | 40 | 40 | 40 | 40 | 40 | 40 | 40 |
| Xiran SZ26080 | P1 | 60 | 60 | 60 | 60 | 60 | 60 | 60 | 60 | 60 | 60 | 60 | 60 |
| | | | | | | | | | | | | | |
| Batch 1 | F2 | 0,0 | 0,0 | 0,0 | 0,0 | 0,2 | 0,2 | 0,4 | 0,2 | 0,4 | 0,2 | 0,2 | 0,0 |
| Batch 2 | | 10 | 0 | 0 | 0 | 0 | 0 | 0 | 0 | 0 | 0 | 0 | 10 |
| Batch 3 | F1 | 0,0 | 10, 0 | 7,5 | 5,0 | 7,5 | 5,0 | 5,0 | 10, 0 | 7,5 | 5,0 | 5,0 | 0,0 |
| Batch 4 | Z | 0,0 | 0,0 | 0,0 | 0,0 | 0,0 | 0,0 | 0,0 | 0,0 | 0,0 | 0,5 | 1,0 | 1,0 |
| Batch 6 | | 2,0 | 0,0 | 0,0 | 0,0 | 0,0 | 0,0 | 0,0 | 0,0 | 0,0 | 0,0 | 0,0 | 0,2 |
| | | | | | | | | | | | | | |
| Batch 5 | Z | 0,25 | 0,25 | 0,25 | 0,25 | 0,25 | 0,25 | 0,25 | 0,25 | 0,25 | 0,25 | 0,25 | 0,25 |

| | | | | | | | | | | | | | |
|---|---|---|---|---|---|---|---|---|---|---|---|---|---|
| V = Vergleichsbeispiel | | | | | | | | | | | | | |

**Tabelle 2: Zusammenstellung der B2 Prüfergebnisse**

| Zusammenstellung der Prüfergebnisse bei Prüfung nach B2 | | | | | | | | |
|---|---|---|---|---|---|---|---|---|
| Bsp. | Probe Nr. | Dichte [kg/m3] | max. Flammhöhe [mm] | Abtropfen [s] | Br. Abtr. [s] | Brennzeit [s] | Messmarke err. [s] | B2 ja/nein |
| V1 | 1 | 35,6 | 100 | - | - | 15 | - | Ja |
| | 2 | 33,8 | 120 | - | - | 13 | - | |
| | 3 | 34,4 | 100 | - | - | 13 | - | |
| | 4 | 33,5 | 110 | - | - | 13 | - | |
| | 5 | 33,9 | 120 | - | - | 13 | - | |
| V2 | 1 | 31,6 | 60 | - | - | 12 | - | Ja |
| | 2 | 32,1 | 70 | - | - | 11 | - | |
| | 3 | 31,7 | 90 | - | - | 10 | - | |
| | 4 | 32,5 | 70 | - | - | 10 | - | |
| | 5 | 32,3 | 70 | - | - | 11 | - | |
| V3 | 1 | 32,5 | 80 | - | - | 13 | - | Ja |
| | 2 | 33,4 | 80 | - | - | 13 | - | |
| | 3 | 33,2 | 110 | - | - | 15 | - | |
| | 4 | 32,8 | 100 | - | - | 11 | - | |
| | 5 | 32,5 | 100 | - | - | 12 | - | |
| V4 | 1 | 31,1 | 160 | 13 | - | >30 | 13 | Nein |
| | 2 | 31,1 | 160 | 12 | - | 26 | 12 | |
| | 3 | | | | - | | - | |
| | 4 | | | | - | | - | |
| | 5 | | | | - | | - | |
| 1 | 1 | 30,1 | 90 | - | - | 12 | - | Ja |
| | 2 | 30,6 | 70 | - | - | 11 | - | |
| | 3 | 29,9 | 70 | 11 | - | 13 | - | |
| | 4 | 31,9 | 90 | - | - | 13 | - | |
| | 5 | 29,9 | 90 | - | - | 12 | - | |
| 2 | 1 | 30,6 | 100 | - | - | 13 | - | Ja |
| | 2 | 30,6 | 80 | 9 | - | 15 | - | |
| | 3 | 29,8 | 100 | - | - | 13 | - | |
| | 4 | 30,5 | 90 | - | - | 13 | - | |
| | 5 | 30,5 | 100 | - | - | 13 | - | |
| 3 | 1 | 29,5 | 90 | - | - | 13 | - | Ja |
| | 2 | 30,2 | 100 | - | - | 19 | - | |
| | 3 | 30 | 100 | 11 | - | 12 | - | |
| | 4 | 29,2 | 100 | 11 | - | 12 | - | |
| | 5 | 28,9 | 100 | 12 | - | 13 | - | |
| 4 | 1 | 30,3 | 60 | - | - | 15 | - | Ja |
| | 2 | 30,5 | 50 | - | - | 14 | - | |
| | 3 | 30,1 | 60 | - | - | 11 | - | |
| | 4 | 30,2 | 30 | - | - | 13 | - | |
| | 5 | 30,1 | 70 | - | - | 13 | - | |
| 5 | 1 | 30,4 | 80 | - | - | 11 | - | Ja |
| | 2 | 29,6 | 70 | - | - | 13 | - | |
| | 3 | 32,5 | 80 | 10 | - | 11 | - | |
| | 4 | 30,1 | 80 | - | - | 11 | - | |
| | 5 | 30,4 | 80 | 7 | - | 10 | - | |
| 6 | 1 | 31,9 | 100 | 7 | - | 16 | - | Ja |
| | 2 | 31,2 | 110 | 11 | - | 14 | - | |
| | 3 | 31,2 | 150 | 9 | - | >40 | - | |
| | 4 | 31,5 | 110 | 11 | - | 23 | - | |
| | 5 | 31,2 | 120 | 11 | - | 16 | - | |
| 7 | 1 | 31,7 | 120 | - | - | 18 | - | Ja |
| | 2 | 32,2 | 100 | 8 | - | 15 | - | |
| | 3 | 32 | 100 | 10 | - | 14 | - | |
| | 4 | 33,7 | 110 | 10 | - | 14 | - | |
| | 5 | 32,7 | 120 | 13 | - | 14 | - | |
| V5 | 1 | 32,8 | 80 | - | - | 13 | - | Ja |
| | 2 | 37,2 | 100 | 11 | - | 15 | - | |
| | 3 | 34,6 | 100 | - | - | 15 | - | |
| | 4 | 35,3 | 110 | - | - | 14 | - | |
| | 5 | 36,1 | 110 | - | - | 15 | - | |

V2 und V3 enthalten keinen Synergisten (Dicumyl). Zwar bestehen beide den B2-Test, V2 aber mit deutlich höherem Gehalt an Flammschutzmittel, V3 hingegen mit höheren Brandhöhen. Zu dieser Reihe gehört auch V4, welches den B2-Test nicht besteht. Im Vergleich bestehen die Beispiele 2, 3, 6, 7 mit gleicher Menge Flammschutzmittel wie V4 aber zusätzlich kleinen Mengen Synergist (Dicumyl) den B2-Test wieder.

## Patentansprüche

1. Extrusionsschaumstoff auf Basis von thermoplastischen Polymeren P, enthaltend
P1) 50 bis 100 Gewichtsteile eines oder mehrerer Styrolcopolymere, welche einpolymerisierte Maleinsäureanhydrid-Einheiten enthalten und einen Styrolgehalt im Bereich von 65 bis 90 Gew.-%, bezogen auf P1, aufweisen,
P2) 0 bis 50 Gewichtsteile eines oder mehrerer Styrol-Acrylnitril-Copolymeren (SAN) mit einem Styrolgehalt im Bereich von 65 bis 90 Gew.-%, bezogen auf P2,
P3) 0 bis 15 Gewichtsteile eines oder mehrerer thermoplastischen Polymeren aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergeben,
F1) 1 bis 10 Gewichtsteile, bevorzugt 2 bis 8 Gewichtsteile, besonders bevorzugt 3 bis 7 Gewichtsteile, bezogen auf P, eines bromierten Trialkylphosphats der Formel (I) als Flammschutzmittel,
(O)P(OR)₃ (I)
wobei
R gleich oder verschieden eine geradkettige oder verzweigte Alkylgruppe mit 1 bis 6 Kohlenstoffatomen bedeutet, wobei ein, zwei oder drei Wasserstoffatome durch Brom substituiert sind.
F2) 0,01 bis 3 Gewichtsteile bezogen auf P, an Dicumyl oder einer oder mehrere Verbindungen aus der Gruppe der Hydroxylamine und Anhydride oder Mischungen davon als Flammschutzsynergisten,
Z) 0 bis 10 Gewichtsteile bezogen auf P, weiterer Zusatzstoffe.

2. Extrusionsschaumstoff nach Anspruch 1, **dadurch gekennzeichnet, dass** das Flammschutzmittel (F1) Tris(tribromneopentyl)phosphat ist.

3. Extrusionsschaumstoff nach Anspruch 1 oder 2, **dadurch gekennzeichnet, dass** der Flammschutzsynergist (F2) Dicumyl ist.

4. Extrusionsschaumstoff nach einem der Ansprüche 1 bis 3, **dadurch gekennzeichnet, dass** das Flammschutzmittel (F1) Tris(tribromneopentyl)phosphat und der Flammschutzsynergist (F2) Dicumyl ist.

5. Extrusionsschaumstoff nach einem der Ansprüche 1 bis 4, **dadurch gekennzeichnet, dass** die thermoplastischen Polymere P eine Glasübergangstemperatur Tg von 120 °C, gemessen mittels DSC nach DIN 53765 bei einer Aufheizrate von 20 K/min, aufweisen.

6. Extrusionsschaumstoff nach einem der Ansprüche 1 bis 5, **dadurch gekennzeichnet, dass** er eine Dichte im Bereich von 20 bis 150 kg/m³ und eine Zellzahl im Bereich von 1 bis 30 Zellen/mm aufweist.

7. Extrusionsschaumstoff gemäß einem der Ansprüche 1 bis 6, **dadurch gekennzeichnet, dass** das oder die Polymere der Komponente P1 aus einpolymerisierten Styrol- und Maleinsäureanhydrid-Einheiten besteht.

8. Extrusionsschaumstoff gemäß einem der Ansprüche 1 bis 7, **dadurch gekennzeichnet, dass** er 25 bis 45 Gewichtsteile (bezogen auf 100 Gewichtsteile P) eines oder mehrerer Copolymere, bestehend aus einpolymerisierten Styrol- und Acrylnitril-Einheiten, enthält.

9. Extrusionsschaumstoff gemäß einem der Ansprüche 1 bis 8, **dadurch gekennzeichnet, dass** das oder die Polymere der Komponente P1 aus einpolymerisierten Styrol- und Maleinsäureanhydrid-Einheiten besteht und dass er 25 bis 45 Gewichtsteile (bezogen auf 100 Gewichtsteile P) eines oder mehrerer Copolymere, bestehend aus einpolymerisierten Styrol- und Acrylnitril-Einheiten, enthält.

10. Extrusionsschaumstoff nach einem der Ansprüche 1 bis 9, **dadurch gekennzeichnet, dass** er als Zusatzstoff einen UV-Stabilisator enthält.

11. Extrusionsschaumstoff nach einem der Ansprüche 1 bis 10, **dadurch gekennzeichnet, dass** die Komponente Z einen oder mehrere Vernetzungsinhibitoren aus der Gruppe der Phosphite, Phosphinite, Phosphane und Metallstearate enthält.

12. Verfahren zur Herstellung eines Extrusionsschaumstoffs umfassend die Stufen
(a) Erzeugen einer Polymerschmelze aus thermoplastischen Polymeren P enthaltend
P1) 50 bis 100 Gewichtsteile eines oder mehrerer Styrolcopolymere, welche einpolymerisierte Maleinsäureanhydrid-Einheiten enthalten und einen Styrolgehalt im Bereich von 65 bis 90 Gew.-%, bezogen auf P1, aufweisen,
P2) 0 bis 50 Gewichtsteile eines oder mehrerer Styrol-Acrylnitril-Copolymere (SAN) mit einem Styrolgehalt im Bereich von 65 bis 90 Gew.-%, bezogen auf P2,
P3) 0 bis 15 Gewichtsteile, bevorzugt 0 bis 10 Gewichtsteile eines oder mehrerer thermoplastischen Polymere aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden,
wobei die Summe aus den Polymerkomponenten (P1), (P2) und (P3) der thermoplastischen Polymeren P 100 Gewichtsteile ergeben,
F1) 1 bis 10 Gewichtsteile, bevorzugt 2 bis 8 Gewichtsteile, besonders bevorzugt 3 bis 7 Gewichtsteile, bezogen auf P, eines bromierten Trialkylphosphats der Formel (I) als Flammschutzmittel,
(O)P(OR)₃ (I)
wobei
R gleich oder verschieden eine geradkettige oder verzweigte Alkylgruppe mit 1 bis 6 Kohlenstoffatomen bedeutet, wobei ein, zwei oder drei Wasserstoffatome durch Brom substituiert sind.
F2) 0,01 bis 3 Gewichtsteile bezogen auf P, an Dicumyl oder einer oder mehrere Verbindungen aus der Gruppe der Hydroxylamine und Anhydride oder Mischungen davon als Flammschutzsynergisten,
Z) 0 bis 10 Gewichtsteile, bevorzugt 0,1 bis 5 Gewichtsteile, bezogen auf 100 Gewichtsteile P, weiterer Zusatzstoffe,
(b) Einbringen von 1 bis 12 Gewichtsteilen (bezogen auf 100 Gewichtsteile P) einer Treibmittelkomponente T, enthaltend Kohlendioxid, in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

13. Verfahren nach Anspruch 12, **dadurch gekennzeichnet, dass** die Polymerschmelze in den Stufen a) und b) auf eine Temperatur im Bereich von 220 bis 260°C gehalten wird.

14. Verfahren nach Anspruch 12 oder 13, **dadurch gekennzeichnet, dass** die Polymerschmelze vor dem Aufschäumen in Stufe c) auf einem Druck im Bereich von 80 bis 140 bar gehalten wird.

15. Verfahren nach einem der Ansprüche 12 bis 14, **dadurch gekennzeichnet, dass** die schäumbare Schmelze in Stufe c) durch eine Düsenplatte bei einer Temperatur im Bereich von 100 bis 140 °C extrudiert wird.

16. Verfahren nach einem der Ansprüche 12 bis 15, **dadurch gekennzeichnet, dass** die Polymerschmelze aus thermoplastischen Polymeren P ausschließlich aus den Komponenten P1 und P2 besteht.

17. Verfahren nach einem der Ansprüche 12 bis 16, **dadurch gekennzeichnet, dass** die Polymerschmelze nach Stufe b) einen Wassergehalt von maximal 1 Gew.-% aufweist.

18. Verfahren nach einem der Ansprüche 12 bis 17, **dadurch gekennzeichnet, dass** in Stufe b) als Treibmittelkomponente T
T1) 2,5 bis 4,5 Gewichtsteile Kohlendioxid und
T2) 1,0 bis 3,0 Gewichtsteile Aceton eingebracht werden.

19. Verfahren nach einem der Ansprüche 12 bis 17, **dadurch gekennzeichnet, dass** in Stufe b) als Treibmittelkomponente T
T1) 2,5 bis 4,5 Gewichtsteile Kohlendioxid,
T2) 1,0 bis 3,0 Gewichtsteile Aceton und
T3) 0,2 bis 1,0 Gewichtsteile Isobutan eingebracht werden.

20. Verwendung des Extrusionsschaumstoffs nach einem der Ansprüche 1 bis 5 als Isoliermaterial, Strukturschaumstoff, in Verbundelementen und/oder Leichtbauelementen, in der Automobilindustrie, im Boots- und/oder Schiffbau, in Windkraftanlagen und im Messebereich
